# EUROPEAN PATENT APPLICATION

(11) **EP 4 761 208 A1**
(43) Date of publication of application: **17.06.2026**
(21) Application number: 24852069.4
(22) Date of filing: 01.07.2024
(51) Int. Cl.: H04L 41/50, H04L 41/0894, H04L 41/5009, H04L 41/147, H04W 88/14

(54) **SERVICE ACCURACY LEVEL**

(30) Priority: 09.08.2023 US 202363531564 P; 02.11.2023 US 202363547128 P
(71) Applicant: LG Electronics Inc., Yeongdeungpo-gu Seoul 07336 (KR)
(72) Inventor: KIM, Hyunsook, Seoul 06772 (KR); LEE, Ki-Dong, Seoul 06772 (KR)
(74) Representative: Mooser, Sebastian Thomas
(86) International application number: PCT/KR2024/009182
(87) International publication number: WO 2025/033713

(57) **Abstract**

An aspect of the present disclosure provides a method by which an AF performs communication related to an accuracy level. The method may comprise the steps of: transmitting, to an NEF, an AF request message; and receiving, from a 5GC, a report message related to the accuracy level.

## Description

### TECHNICAL FIELD

The present disclosure relates to mobile communication.

### BACKGROUND ART

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

In 5G, various services such as robot services are being discussed. However, there is a problem that the accuracy level of a service cannot be dynamically and/or effectively adjusted.

### DISCLOSURE

### TECHNICAL SOLUTION

According to an embodiment, a method is provided in which an AF performs communication related to an accuracy level. The method may include transmitting an AF request message to an NEF; and receiving a report message related to the accuracy level from the 5GC.

According to an embodiment, an apparatus implementing the method may be provided.

According to an embodiment, a method is provided in which a UE performs communication related to an accuracy level. The method may include receiving, from a network entity, a configuration related to an accuracy level of a service for the UE; and performing monitoring related to a required accuracy level at a location of the UE based on the configuration.

According to an embodiment, an apparatus implementing the method may be provided.

According to an embodiment, a method is provided in which a PCF performs communication related to an accuracy level. The method may include receiving one or more parameters related to the accuracy level from the NEF; generating a policy for one or more entities included in the 5GC to adjust the accuracy level and/or perform monitoring related to the accuracy level; and transmitting the policy to the 5GC.

According to an embodiment, an apparatus implementing the method may be provided.

### BRIEF DESCRIPTION OF THE DRAWINGS

FIG. 1 shows an example of a communication system to which implementations of the present disclosure are applied.
FIG. 2 shows an example of wireless devices to which implementations of the present disclosure are applied.
FIG. 3 shows an example of UE to which implementations of the present disclosure are applied.
FIG. 4 shows an example of 5G system architecture to which implementations of the present disclosure are applied.
FIGS. 5 and 6 show an example of a registration procedure to which implementations of the present disclosure are applied.
FIGS. 7a and 7b illustrate an example of an operation of a robot according to an embodiment of the present disclosure.
FIG. 8 illustrates an example of an NEF service operation according to an embodiment of the present specification.
FIG. 9 illustrates an example of a procedure according to an embodiment of the present specification.
FIGS. 10a and 10b are examples of scenarios for adjusting a clock synchronization accuracy level according to an embodiment of the present specification.
FIG. 11 is an example of a procedure related to updating subscriber information according to an embodiment of the present specification.
FIG. 12 illustrates a procedure related to updating a PCC rule according to an embodiment of the present specification.
FIG. 13 illustrates an example of an operation of an AF according to an embodiment of the present specification.
FIG. 14 illustrates an example of an operation of a terminal according to an embodiment of the present specification.

### MODE FOR INVENTION

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5G new radio (NR).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

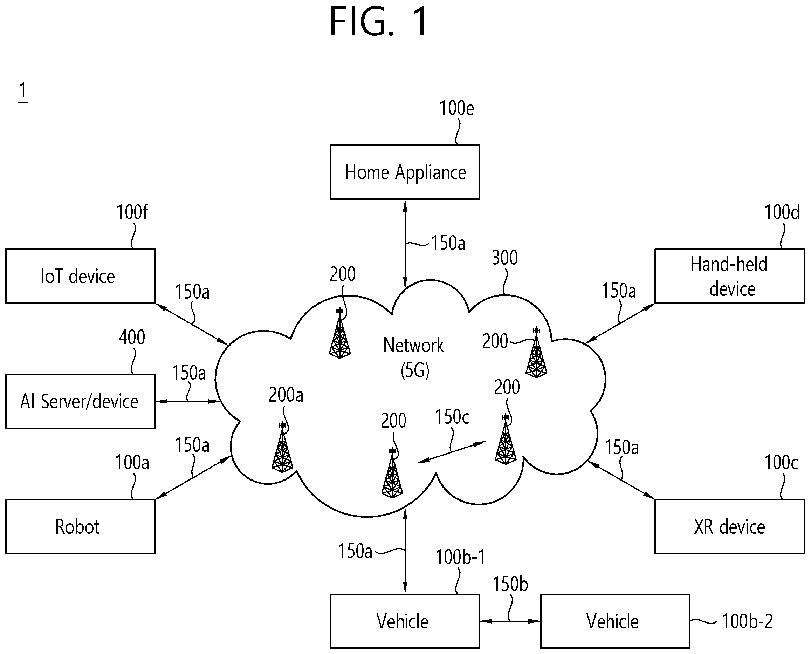

FIG. 1 shows an example of a communication system to which implementations of the present disclosure are applied.

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/SG devices. The wireless devices 100a to 100f may include, without being limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

NR supports multiples numerologies (and/or multiple subcarrier spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., FR1 and FR2. The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include narrowband internet-of-things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally, and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally, and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

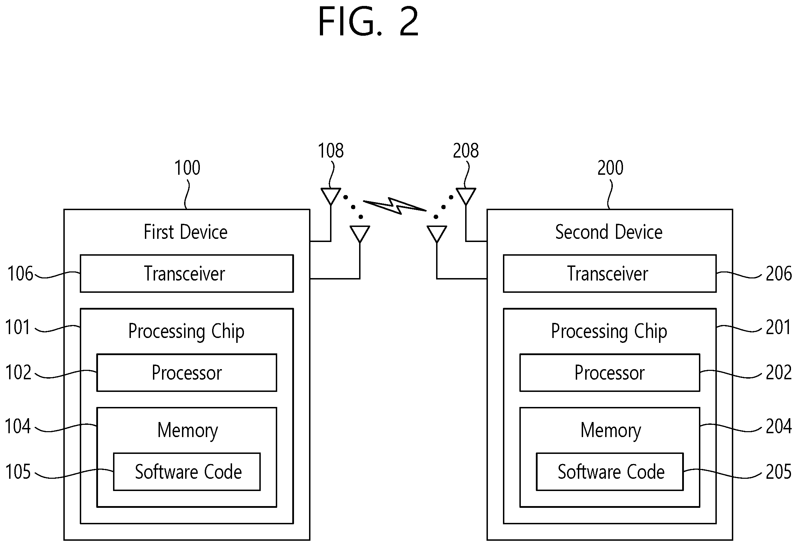

FIG. 2 shows an example of wireless devices to which implementations of the present disclosure are applied.

In FIG. 2, The first wireless device 100 and/or the second wireless device 200 may be implemented in various forms according to use cases/services. For example, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1. The first wireless device 100 and/or the second wireless device 200 may be configured by various elements, devices/parts, and/or modules.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. Additional and/or alternatively, the memory 104 may be placed outside of the processing chip 101.

The processor 102 may control the memory 104 and/or the transceiver 106 and may be adapted to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a firmware and/or a software code 105 which implements codes, commands, and/or a set of commands that, when executed by the processor 102, perform the descriptions, functions, procedures, suggestions, methods and/or operational flowcharts disclosed in the present disclosure. For example, the firmware and/or the software code 105 may implement instructions that, when executed by the processor 102, perform the descriptions, functions, procedures, suggestions, methods and/or operational flowcharts disclosed in the present disclosure. For example, the firmware and/or the software code 105 may control the processor 102 to perform one or more protocols. For example, the firmware and/or the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with Radio Frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. Additional and/or alternatively, the memory 204 may be placed outside of the processing chip 201.

The processor 202 may control the memory 204 and/or the transceiver 206 and may be adapted to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a firmware and/or a software code 205 which implements codes, commands, and/or a set of commands that, when executed by the processor 202, perform the descriptions, functions, procedures, suggestions, methods and/or operational flowcharts disclosed in the present disclosure. For example, the firmware and/or the software code 205 may implement instructions that, when executed by the processor 202, perform the descriptions, functions, procedures, suggestions, methods and/or operational flowcharts disclosed in the present disclosure. For example, the firmware and/or the software code 205 may control the processor 202 to perform one or more protocols. For example, the firmware and/or the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as Physical (PHY) layer, Media Access Control (MAC) layer, Radio Link Control (RLC) layer, Packet Data Convergence Protocol (PDCP) layer, Radio Resource Control (RRC) layer, and Service Data Adaptation Protocol (SDAP) layer). The one or more processors 102 and 202 may generate one or more Protocol Data Units (PDUs), one or more Service Data Unit (SDUs), messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. For example, the one or more processors 102 and 202 may be configured by a set of a communication control processor, an Application Processor (AP), an Electronic Control Unit (ECU), a Central Processing Unit (CPU), a Graphic Processing Unit (GPU), and a memory control processor. The one or more memories 104 and 204 may be connected to the one or more processors 102 and 202 and store various types of data, signals, messages, information, programs, code, instructions, and/or commands. The one or more memories 104 and 204 may be configured by Random Access Memory (RAM), Dynamic RAM (DRAM), Read-Only Memory (ROM), electrically Erasable Programmable Read-Only Memory (EPROM), flash memory, volatile memory, non-volatile memory, hard drive, register, cash memory, computer-readable storage medium, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208. Additionally, and/or alternatively, the one or more transceivers 106 and 206 may include one or more antennas 108 and 208. The one or more transceivers 106 and 206 may be adapted to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas 108 and 208 may be a plurality of physical antennas or a plurality of logical antennas (e.g., antenna ports).

The one or more transceivers 106 and 206 may convert received user data, control information, radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the one or more transceivers 106 and 206 can up-convert OFDM baseband signals to OFDM signals by their (analog) oscillators and/or filters under the control of the one or more processors 102 and 202 and transmit the up-converted OFDM signals at the carrier frequency. The one or more transceivers 106 and 206 may receive OFDM signals at a carrier frequency and down-convert the OFDM signals into OFDM baseband signals by their (analog) oscillators and/or filters under the control of the one or more processors 102 and 202.

Although not shown in FIG. 2, the wireless devices 100 and 200 may further include additional components. The additional components 140 may be variously configured according to types of the wireless devices 100 and 200. For example, the additional components 140 may include at least one of a power unit/battery, an Input/Output (I/O) device (e.g., audio I/O port, video I/O port), a driving device, and a computing device. The additional components 140 may be coupled to the one or more processors 102 and 202 via various technologies, such as a wired or wireless connection.

In the implementations of the present disclosure, a UE may operate as a transmitting device in UL and as a receiving device in DL. In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be adapted to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be adapted to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

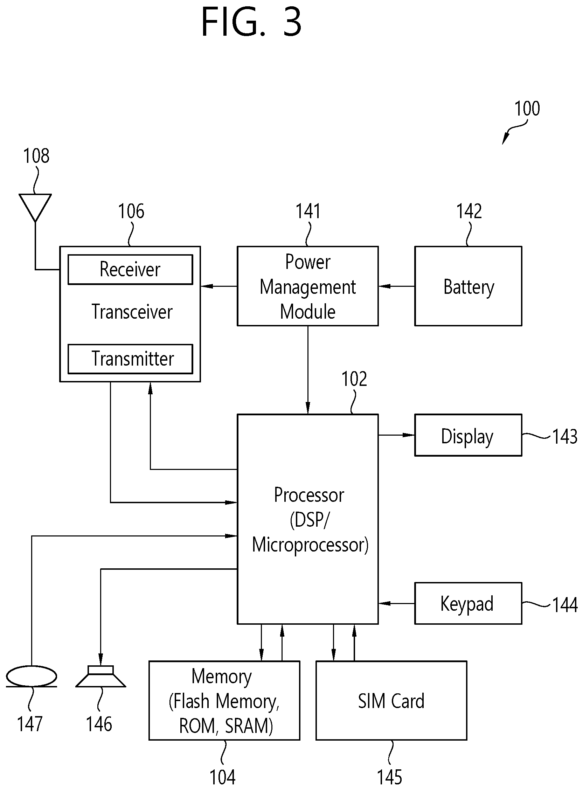

FIG. 3 shows an example of UE to which implementations of the present disclosure are applied.

Referring to FIG. 3, a UE 100 may correspond to the first wireless device 100 of FIG. 2.

A UE 100 includes a processor 102, a memory 104, a transceiver 106, one or more antennas 108, a power management module 141, a battery 142, a display 143, a keypad 144, a Subscriber Identification Module (SIM) card 145, a speaker 146, and a microphone 147.

The processor 102 may be adapted to implement the descriptions, functions, procedures, suggestions, methods and/or operational flowcharts disclosed in the present disclosure. The processor 102 may be adapted to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of DSP, CPU, GPU, a modem (modulator and demodulator). An example of the processor 102 may be found in SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be com-municatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 141 manages power for the processor 102 and/or the transceiver 106. The battery 142 supplies power to the power management module 141.

The display 143 outputs results processed by the processor 102. The keypad 144 receives inputs to be used by the processor 102. The keypad 144 may be shown on the display 143.

The SIM card 145 is an integrated circuit that is intended to securely store the International Mobile Subscriber Identity (IMSI) number and its related key, which are used to identify and authenticate subscribers on mobile telephony devices (such as mobile phones and computers). It is also possible to store contact information on many SIM cards.

The speaker 146 outputs sound-related results processed by the processor 102. The microphone 147 receives sound-related inputs to be used by the processor 102.

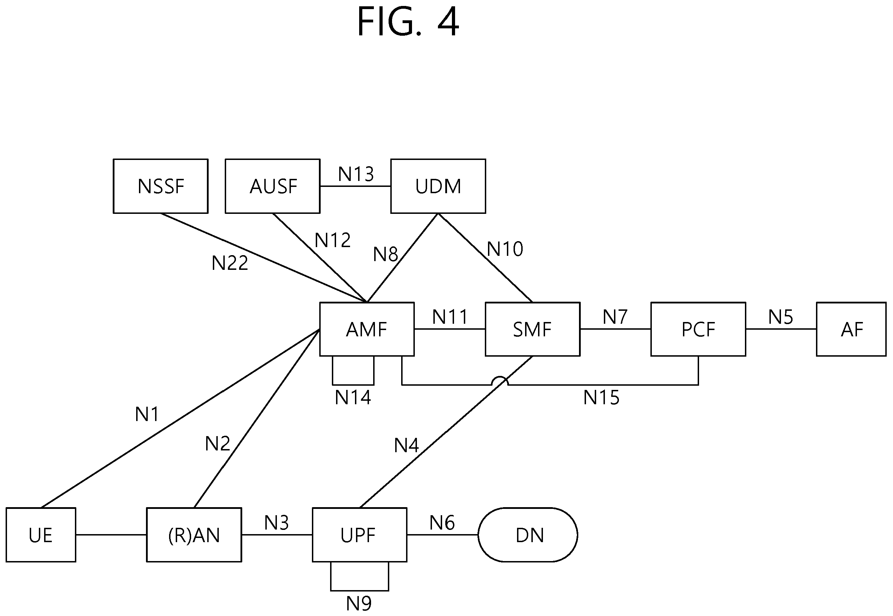

FIG. 4 shows an example of 5G system architecture to which implementations of the present disclosure are applied.

The 5G system (5GS) architecture consists of the following network functions (NF).
- Authentication Server Function (AUSF)
- Access and Mobility Management Function (AMF)
- Data Network (DN), e.g., operator services, Internet access or 3rd party services
- Unstructured Data Storage Function (UDSF)
- Network Exposure Function (NEF)
- Intermediate NEF (I-NEF)
- Network Repository Function (NRF)
- Network Slice Selection Function (NSSF)
- Policy Control Function (PCF)
- Session Management Function (SMF)
- Unified Data Management (UDM)
- Unified Data Repository (UDR)
- User Plane Function (UPF)
- UE radio Capability Management Function (UCMF)
- Application Function (AF)
- User Equipment (UE)
- (Radio) Access Network ((R)AN)
- 5G-Equipment Identity Register (5G-EIR)
- Network Data Analytics Function (NWDAF)
- CHarging Function (CHF)

Furthermore, the following network functions may be considered.
- Non-3GPP InterWorking Function (N3IWF)
- Trusted Non-3GPP Gateway Function (TNGF)
- Wireline Access Gateway Function (W-AGF)

FIG. 4 depicts the 5G system architecture in the non-roaming case, using the reference point representation showing how various network functions interact with each other.

In FIG. 4, for the sake of clarity of the point-to-point diagrams, the UDSF, NEF and NRF have not been depicted. However, all depicted Network Functions can interact with the UDSF, UDR, NEF and NRF as necessary.

For clarity, the UDR and its connections with other NFs, e.g., PCF, are not depicted in FIG. 4. For clarity, the NWDAF and its connections with other NFs, e.g., PCF, are not depicted in FIG. 4.

The 5G system architecture contains the following reference points:
- N1: Reference point between the UE and the AMF.
- N2: Reference point between the (R)AN and the AMF.
- N3: Reference point between the (R)AN and the UPF.
- N4: Reference point between the SMF and the UPF.
- N6: Reference point between the UPF and a Data Network.
- N9: Reference point between two UPFs.

The following reference points show the interactions that exist between the NF services in the NFs.
- N5: Reference point between the PCF and an AF.
- N7: Reference point between the SMF and the PCF.
- N8: Reference point between the UDM and the AMF.
- N10: Reference point between the UDM and the SMF.
- N11: Reference point between the AMF and the SMF.
- N12: Reference point between the AMF and the AUSF.
- N13: Reference point between the UDM and the AUSF.
- N14: Reference point between two AMFs.
- N15: Reference point between the PCF and the AMF in the case of non-roaming scenario, PCF in the visited network and AMF in the case of roaming scenario.
- N16: Reference point between two SMFs, (in roaming case between SMF in the visited network and the SMF in the home network).
- N22: Reference point between the AMF and the NSSF.

In some cases, a couple of NFs may need to be associated with each other to serve a UE.

A registration procedure is described. Reference may be made to section 4.2.2.2 of 3GPP TS 23.502 V16.3.0 (2019-12).

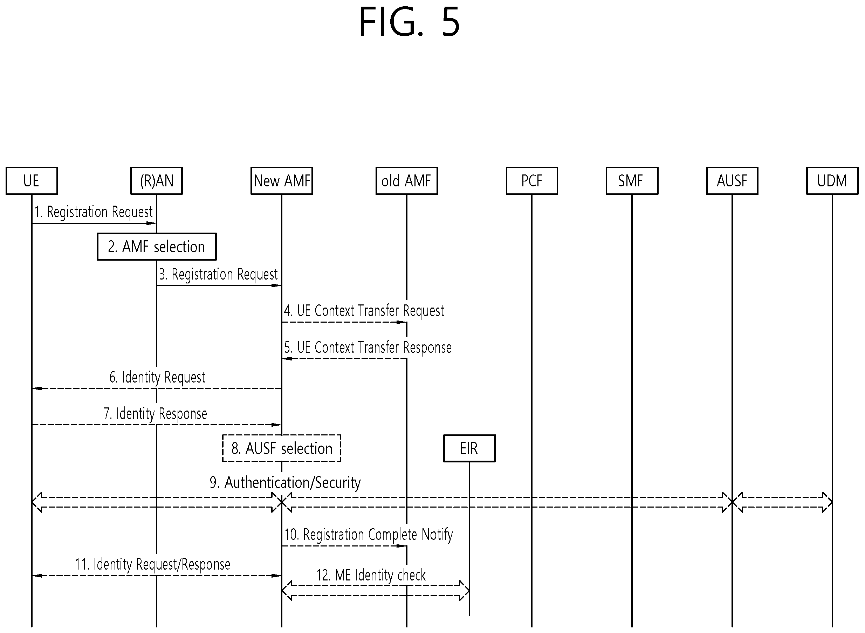

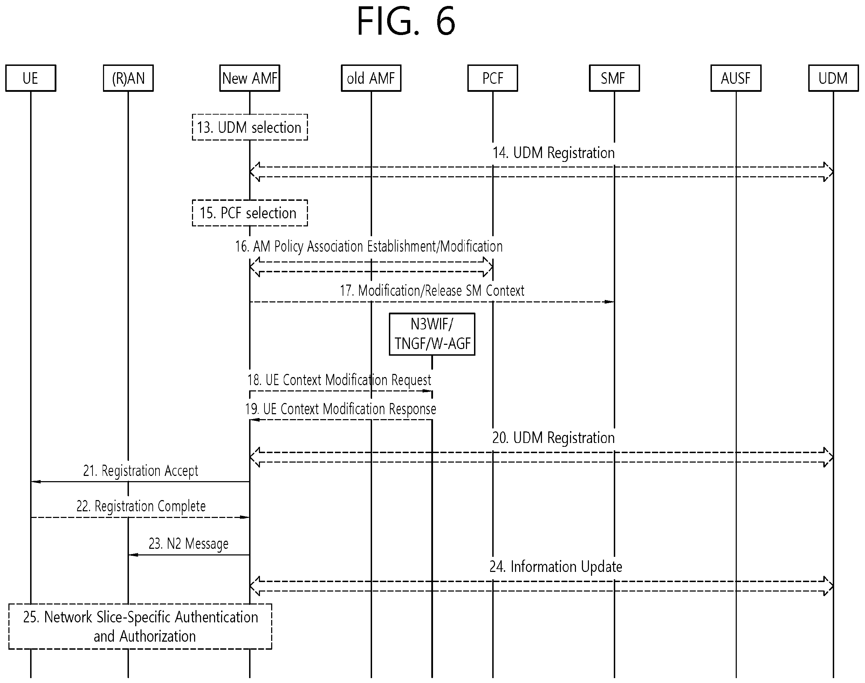

FIGS. 5 and 6 show an example of a registration procedure to which implementations of the present disclosure are applied.

A UE needs to register with the network to get authorized to receive services, to enable mobility tracking and to enable reachability. The UE initiates the registration procedure using one of the following registration types:
- Initial registration to the 5GS; or
- Mobility registration update; or
- Periodic registration update; or
- Emergency registration.

The general registration procedure in FIGS. 5 and 6 applies on all these registration procedures, but the periodic registration update need not include all parameters that are used in other registration cases.

The general registration procedure in FIGS. 5 and 6 is also used for the case of registration in 3GPP access when the UE is already registered in a non-3GPP access, and vice versa. Registration in 3GPP access when the UE is already registered in a non-3GPP access scenario may require an AMF change.

First, procedures of FIG. 5 are described.
(1) Step 1: The UE transmits a Registration Request message to the (R)AN. The Registration Request message corresponds to AN message.

The Registration Request message may include AN parameters. In the case of NG-RAN, the AN parameters include, e.g., 5G SAE temporary mobile subscriber identity (5G-S-TMSI) or globally unique AMF ID (GUAMI), the selected public land mobile network (PLMN) ID (or PLMN ID and network identifier (NID)) and Requested network slice selection assistance information (NSSAI). The AN parameters also include establishment cause. The establishment cause provides the reason for requesting the establishment of an RRC connection. Whether and how the UE includes the Requested NSSAI as part of the AN parameters is dependent on the value of the access stratum connection establishment NSSAI inclusion mode parameter.

The Registration Request message may include a registration type. The registration type indicates if the UE wants to perform an initial registration (i.e., the UE is in RM-DEREGISTERED state), a mobility registration update (i.e., the UE is in RM-REGISTERED state and initiates a registration procedure due to mobility or due to the UE needs to update its capabilities or protocol parameters, or to request a change of the set of network slices it is allowed to use), a periodic registration update (i.e., the UE is in RM-REGISTERED state and initiates a registration procedure due to the periodic registration update timer expiry) or an emergency registration (i.e., the UE is in limited service state).

When the UE is performing an initial registration, the UE shall indicate its UE identity in the Registration Request message as follows, listed in decreasing order of preference:
i) a 5G globally unique temporary identifier (5G-GUTI) mapped from an evolved packet system (EPS) GUTI, if the UE has a valid EPS GUTI.
ii) a native 5G-GUTI assigned by the PLMN to which the UE is attempting to register, if available;
iii) a native 5G-GUTI assigned by an equivalent PLMN to the PLMN to which the UE is attempting to register, if available;
iv) a native 5G-GUTI assigned by any other PLMN, if available.
v) Otherwise, the UE shall include its subscriber concealed identifier (SUCI) in the Registration Request message.

When the UE performing an initial registration has both a valid EPS GUTI and a native 5G-GUTI, the UE shall also indicate the native 5G-GUTI as additional GUTI. If more than one native 5G-GUTIs are available, the UE shall select the 5G-GUTI in decreasing order of preference among items (ii)-(iv) in the list above.

When the UE is performing an initial registration with a native 5G-GUTI, then the UE shall indicate the related GUAMI information in the AN parameters. When the UE is performing an initial registration with its SUCI, the UE shall not indicate any GUAMI information in the AN parameters.

For an emergency registration, the SUCI shall be included if the UE does not have a valid 5G-GUTI available; the permanent equipment identifier (PEI) shall be included when the UE has no subscriber permanent identifier (SUPI) and no valid 5G-GUTI. In other cases, the 5G-GUTI is included and it indicates the last serving AMF.

The Registration Request message may also include security parameters, PDU Session Status, etc. The security parameters are used for authentication and integrity protection. The PDU Session Status indicates the previously established PDU sessions in the UE. When the UE is connected to the two AMFs belonging to different PLMN via 3GPP access and non-3GPP access then the PDU Session status indicates the established PDU Session of the current PLMN in the UE.

(2) Step 2: The (R)AN selects an AMF.

If a 5G-S-TMSI or GUAMI is not included or the 5G-S-TMSI or GUAMI does not indicate a valid AMF, the (R)AN, based on (R)AT and requested NSSAI, if available, selects an AMF.

If UE is in CM-CONNECTED state, the (R)AN can forward the Registration Request message to the AMF based on the N2 connection of the UE.

If the (R)AN cannot select an appropriate AMF, it forwards the Registration Request message to an AMF which has been configured, in the (R)AN, to perform AMF selection.

(3) Step 3: The (R)AN transmits a Registration Request message to the new AMF. The Registration Request message corresponds to N2 message.

The Registration Request message may include whole information and/or a part of information included in the Registration Request message received from the UE which is described in step 1.

The Registration Request message may include N2 parameters. When NG-RAN is used, the N2 parameters include the selected PLMN ID (or PLMN ID and NID), location information and cell identity related to the cell in which the UE is camping, UE context request which indicates that a UE context including security information needs to be setup at the NG-RAN. When NG-RAN is used, the N2 parameters shall also include the establishment cause.

If the Registration type indicated by the UE is Periodic Registration Update, then steps 4 to 19 may be omitted.

(4) Step 4: If the UE's 5G-GUTI was included in the Registration Request message and the serving AMF has changed since last registration procedure, the new AMF may invoke the Namf_Communication_UEContextTransfer service operation on the old AMF including the complete registration request non-access stratum (NAS) message to request the UE's SUPI and UE context.

(5) Step 5: The Old AMF may respond to the new AMF for the Namf_Communication _UEContextTransfer invocation by including the UE's SUPI and UE context.

(6) Step 6: If the SUCI is not provided by the UE nor retrieved from the old AMF, the identity request procedure may be initiated by the new AMF sending the Identity Request message to the UE requesting the SUCI.

(7) Step 7: The UE may respond with an Identity Response message including the SUCI. The UE derives the SUCI by using the provisioned public key of the home PLMN (HPLMN).

(8) Step 8: The new AMF may decide to initiate UE authentication by invoking an AUSF. In that case, the new AMF selects an AUSF based on SUPI or SUCI.

(9) Step 9: Authentication/security may be established by the UE, new AMF, AUSF and/or UDM.

(10) Step 10: If the AMF has changed, the new AMF may notify the old AMF that the registration of the UE in the new AMF is completed by invoking the Namf_Communication_RegistrationCompleteNotify service operation. If the authentication/security procedure fails, then the registration shall be rejected, and the new AMF may invoke the Namf_Communication _RegistrationCompleteNotify service operation with a reject indication reason code towards the old AMF. The old AMF may continue as if the UE context transfer service operation was never received.

(11) Step 11: If the PEI was not provided by the UE nor retrieved from the old AMF, the Identity Request procedure may be initiated by the new AMF sending an Identity Request message to the UE to retrieve the PEI. The PEI shall be transferred encrypted unless the UE performs emergency registration and cannot be authenticated.

(12) Step 12: Optionally, the new AMF may initiate ME identity check by invoking the N5g-eir_EquipmentIdenti-tyCheck_Get service operation.

Now, procedures of FIG. 6, which follow the procedures of FIG. 5, are described.

(13) Step 13: If step 14 below is to be performed, the new AMF, based on the SUPI, may select a UDM, then UDM may select a UDR instance.

(14) Step 14: The new AMF may register with the UDM.

(15) Step 15: The new AMF may select a PCF.

(16) Step 16: The new AMF may optionally perform an AM Policy Association Establishment/Modification.

(17) Step 17: The new AMF may transmit Update/Release SM Context message (e.g., Nsmf_PDUSession_Up-dateSMContext and/or Nsmf_PDUSession _ReleaseSMContext) to the SMF.

(18) Step 18: If the new AMF and the old AMF are in the same PLMN, the new AMF may send a UE Context Modification Request to the N3IWF/TNGF/W-AGF.

(19) Step 19: The N3IWF/TNGF/W-AGF may send a UE Context Modification Response to the new AMF.

(20) Step 20: After the new AMF receives the response message from the N3IWF/TNGF/W-AGF in step 19, the new AMF may register with the UDM.

(21) Step 21: The new AMF transmits a Registration Accept message to the UE.

The new AMF sends a Registration Accept message to the UE indicating that the Registration Request has been accepted. 5G-GUTI is included if the new AMF allocates a new 5G-GUTI. If the UE is already in RM-REGISTERED state via another access in the same PLMN, the UE shall use the 5G-GUTI received in the Registration Accept message for both registrations. If no 5G-GUTI is included in the Registration Accept message, then the UE uses the 5G-GUTI assigned for the existing registration also for the new registration. If the new AMF allocates a new registration area, it shall send the registration area to the UE via Registration Accept message. If there is no registration area included in the Registration Accept message, the UE shall consider the old registration area as valid. Mobility Restrictions is included in case mobility restrictions applies for the UE and registration type is not emergency registration. The new AMF indicates the established PDU sessions to the UE in the PDU Session status. The UE removes locally any internal resources related to PDU sessions that are not marked as established in the received PDU Session status. When the UE is connected to the two AMFs belonging to different PLMN via 3GPP access and non-3GPP access then the UE removes locally any internal resources related to the PDU session of the current PLMN that are not marked as established in received PDU Session status. If the PDU Session status information was in the Registration Request message, the new AMF shall indicate the PDU Session status to the UE.

The Allowed NSSAI provided in the Registration Accept message is valid in the registration area and it applies for all the PLMNs which have their tracking areas included in the registration area. The Mapping Of Allowed NSSAI is the mapping of each S-NSSAI of the Allowed NSSAI to the HPLMN S-NSSAIs. The Mapping Of Configured NSSAI is the mapping of each S-NSSAI of the Configured NSSAI for the serving PLMN to the HPLMN S-NSSAIs.

Furthermore, optionally the new AMF performs a UE Policy Association Establishment.

(22) Step 22: The UE may send a Registration Complete message to the new AMF when it has successfully updated itself.

The UE may send a Registration Complete message to the new AMF to acknowledge if a new 5G-GUTI was assigned.

(23) Step 23: For registration over 3GPP Access, if the new AMF does not release the signaling connection, the new AMF may send the RRC Inactive Assistance Information to the NG-RAN. For registration over non-3GPP Access, if the UE is also in CM-CONNECTED state on 3GPP access, the new AMF may send the RRC Inactive Assistance Information to the NG-RAN.

(24) Step 24: The new AMF may perform information update towards the UDM.

(25) Step 25: The UE may execute Network Slice-Specific Authentication and Authorization (NSSAA) procedure.

In the present disclosure, a UE may be a robot. A plurality of robots may perform communication between robots and with a network.

For example, high-resolution 3D map construction through online cooperation may be described.

In this use case, a low-energy (or energy-efficient) cooperation scenario is considered in which several robot groups jointly build a 3D map. This use case may aim at use in atypical environments such as cleaning corporate buildings, preparing for large-scale building disinfection, and agricultural automation. When multiple robots cooperate to collect measurement data, energy can be saved, better quality results can be created, or both can be achieved.

For example, some aspects related to 'agricultural automation' may be studied as a scenario combining ground mobility and aerial mobility.

For example, in this use case, the meaning of 'map' is not necessarily limited to geographical shapes, but may also include objects that are useful or essential for robots working in irregular or unstructured environments.

A group of service robots equipped with multi-dimensional ambient sensing, computing (stand-alone and/or via a computing fabric), learning and model building federation, and 3GPP subscription-based communication functions can cooperate for one joint project.

Communication service availability with the edge (or cloud) can be divided into three types: unavailable, temporarily unavailable, and available (for a specific period; the term 'available' does not mean 'permanently available' but is a positive interpretation).

For example, this use case may focus on ProSe-based operation (hereinafter also referred to as "ProSe-based") that is partially or intermittently connected to an NG-RAN (or an edge server via an NG-RAN).

An edge (e.g., server) available to one or more of these service robots may relieve the computing burden (whether within the scope of 3GPP or not), helping to access service-specific network slices or other forms of network resources with specific performance requirements.

A robot application operator may start operating a group of service robots which are UEs.

These service robots discover each other and share each other's functions.

For example, the functions of each service robot (e.g., UE) include specific characteristics such as supported RAT types (e.g., NR, E-UTRA, or non-3GPP access technology) and information that does not fall within the scope of the communication layer, such as battery level.

All or part of these service robots form a working group with one or more leader robots and start communication.

Member robots transmit measurement data to the leader robot so that the leader robot may perform the following steps to build a 3D map.

NOTE 5: The role of the leader robot includes coordination necessary for the operation of the service robot's working group, such as the role of a synchronization master for other robots (synchronization devices) within the working clock domain.

Robots scan environmental parameters including 3GPP service availability and can cooperatively decide which operating scenario (e.g., Uu-based or ProSe-based) should be selected.

Each service robot in the working group walks in cooperation with each other, thereby forming a gregarious cluster (i.e., the distance between any pair is not unnecessarily long, so the performance of the map construction result does not deteriorate).

Each robot is exposed to an uneven surface along a trajectory (e.g., signal angle measurements are not static, which may result in an unexpected loss of measurement accuracy level).

According to the accuracy level of the 3D map at a specific point of the work site and the decision of the leader robot, the application layer of the leader robot requests to adjust a clock synchronization target value within a clock synchronization budget.

A problem may occur in one robot (e.g., robot A) during movement, and the movement speed may drop unexpectedly.

Member robot A may already predict this problem in advance, report this information to the leader robot as a follow-up measure, and mark a timestamp of this outlier situation in the measurement data.

Member robot A decides whether to transmit measurement data including an outlier indication to the leader robot.

The leader robot decides whether to use the received data in which the outlier is indicated from member robot A for 3D map construction.

Later, member robot A moves slightly away from the gregarious cluster, and the connection with the relay UE robot (or gNB in the Uu-based scenario) is temporarily disconnected. Member robot A can immediately resume the connection.

The following drawings are prepared to describe a specific example of the present specification. Since specific names of apparatuses or specific names of signals/messages/fields described in the drawings are presented by way of example, the technical features of the present specification are not limited to the specific names used in the drawings below.

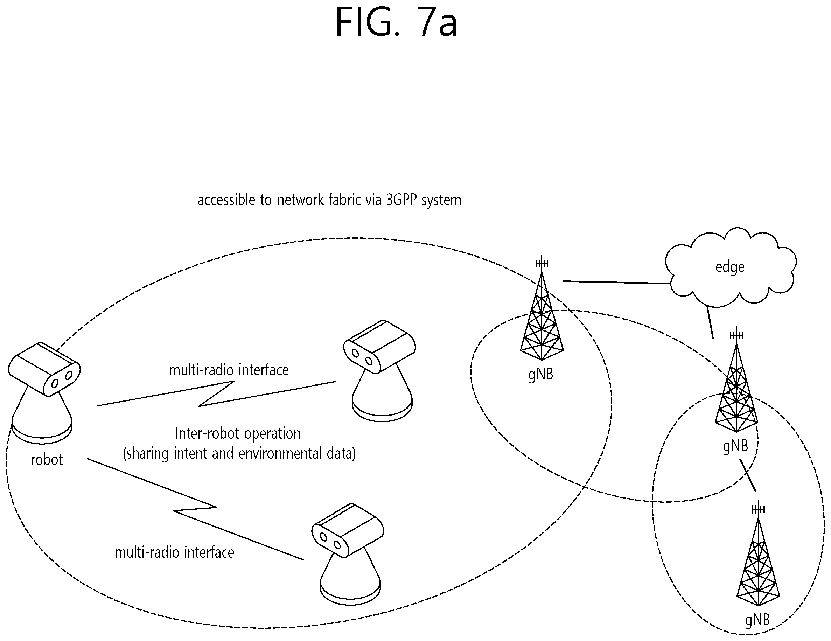

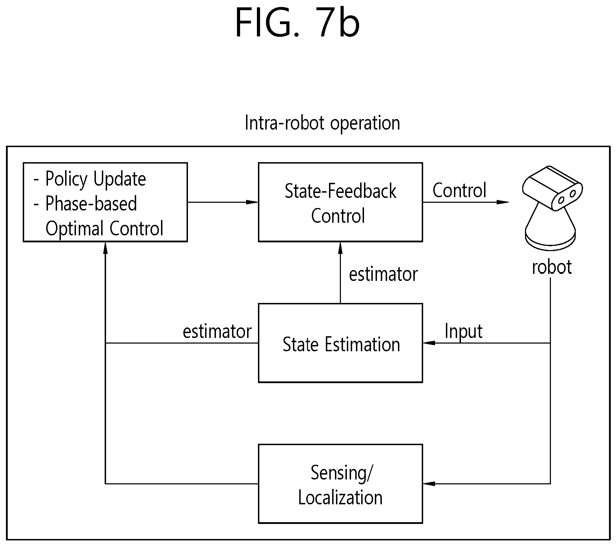

**FIGS. 7a** **and** **7b** **illustrate an example of an operation of a robot according to an embodiment of the present disclosure.**

FIGS. 7a and 7b show examples of inter-robot operations and intra-robot operations. 7a and 7b are examples of inter-robot tasks in which inter-robot tasks (e.g., intra-robot tasks) are performed in a network of service robots having ambient intelligence.

Since a robot working group (e.g., service robots) can build a 3D map only with a required level of accuracy, it is not necessary to consume computing and communication resources to build a 3D map of an excessively accurate area.

FIG. 7a shows an example of inter-robot tasks. As shown in FIG. 7a, a robot performs inter-robot tasks based on multiple wireless interfaces with other robots. Robots can share intent and environmental data. Robots can access the network fabric through the 3GPP system. One of the base stations (e.g., gNB) can be leased to connect to the edge (e.g., server).

FIG. 7b shows an example of an intra-robot operation. The robot can input data for state estimation and sensing/positioning measurement. The robot can perform policy updates and/or phase-based optimal control based on state estimation data and sensing/positioning data. The robot can be controlled by state feedback control based on state estimation, policy updates, and phase-based optimal control.

For critical areas, the robot can adjust the accuracy level.

The robot can prevent potential noise factors that may affect the 3D map quality through prediction-based indications.

A robot that is momentarily disconnected can resume connection very quickly and send time-critical information to other members.

Challenges and potential gaps exist as in the following examples.

The 5G system should be able to provide means for guaranteeing clock synchronization with a very high accuracy level. This is to support a service robot group to build a 3D map of an accuracy level required in an application layer through collaboration (i.e., synchronization between service robots in a collaborating group and synchronization between multiple sources related to each service robot). Clock synchronization accuracy is provided by the 5G system to support applications requiring time-sensitive communication. For example, the accuracy level of clock synchronization is 900 ns.

The 5G system should be able to guarantee the integrity and validity of clock synchronization for a specified period of time when the service robot group operates based on ProSe outside the coverage area provided by the NG-RAN.

The length of time may vary depending on the project type and is required according to the application of the service robot.

If the integrity and validity of clock synchronization cannot be guaranteed for a specified period of time, the 5G system is expected to notify the application.

The 5G system should be able to provide means for the UE(s) to adjust the accuracy level of clock synchronization.

The 5G system should be able to provide means for sharing information related to the accuracy level and integrity of clock synchronization with the cloud (Uu-based scenario) or the leader robot (ProSe-based scenario).

When an ongoing connection is interrupted (for example, due to a radio link failure between a robot and a communication counterpart), the network should be able to provide means for resuming the connection within a very short time required by the application layer. For example, according to an embodiment of the present specification, when an ongoing connection is interrupted (for example, due to a radio link failure between a robot and a communication counterpart) within a very short time required by the application layer, resuming the connection may be supported.

For reference, according to the prior art, the time required to safely reconnect is less than 1 second. Robot applications performing critical roles may require a much shorter time than this: for example, it may be less than 100 ms for critical tasks and less than 10 ms for very critical tasks.

For reference, this requirement does not apply to scenarios where a service robot experiences a more severe level of interruption, such as a change in 3GPP registration status.

The 5G system should be able to provide means for a constituent robot that predicts a communication failure or measurement failure to propagate necessary information to one or more destinations within a very short time required by the application layer.

For reference, the required time depends on the application (e.g., less than 100 ms for medium-level interruptions, less than 10 ms for severe-level interruptions). The above CPG applies to both RRC connected mode and RRC inactive mode. The above CPG does not apply to RRC idle mode.

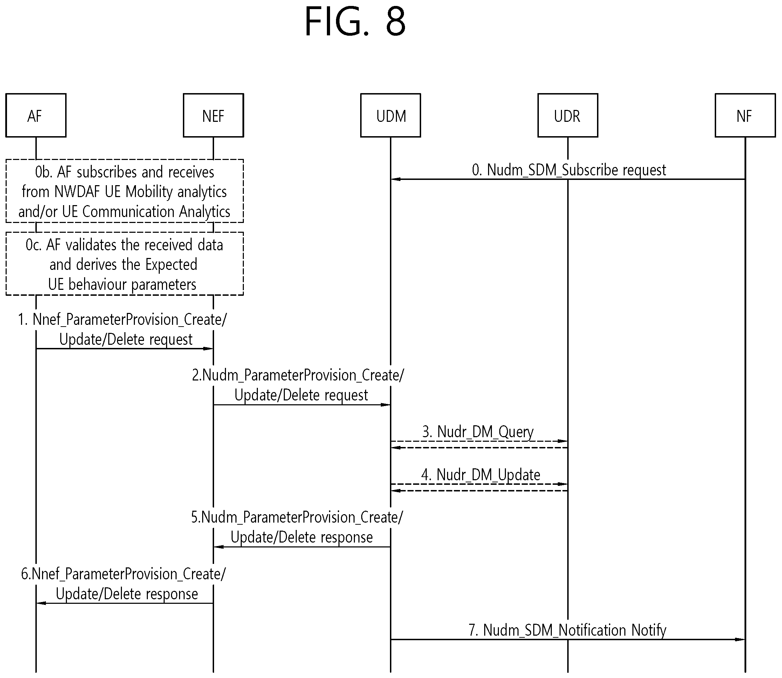

Hereinafter, an example of External Parameter Provisioning will be described with reference to the example of FIG. 8.

The following drawings are prepared to describe a specific example of the present specification. Since specific names of apparatuses or specific names of signals/messages/fields described in the drawings are presented by way of example, the technical features of the present specification are not limited to the specific names used in the drawings below.

**FIG. 8** **illustrates an example of an NEF service operation according to an embodiment of the present specification.**

The provisioning function allows an external party to provision information, such as expected UE behavior and service-specific parameters or 5G Virtual Network (VN) group information, to 5G network functions. When provisioning expected UE behavior information, the expected UE behavior information consists of information on expected UE movement and communication characteristics. In the case of 5G VN group information provisioning, the provisioning information consists of information on a 5G VN group. Service-specific information consists of information for supporting a specific service in the 5G system. The provisioned data can be used by other NFs.

The example of FIG. 8 shows an example of an NEF service operation information flow. For example, the example of FIG. 8 includes various NEF service operation actions (e.g., Nnef_ParameterProvision _Create / Nnef_ParameterProvision _Update / Nnef_ParameterProvision _Delete request/response operations).

Regarding the example of FIG. 8, reference may be made to 3GPP TS 23.502 V18.1.1 S4.15.6.2.

0. An NF may subscribe to UDM notifications for updates to UE and/or group subscription data (Group Subscription data). In the UDM subscription, the NF may request a notification for expected UE behavior parameters (e.g., see Table 3) or application-specific expected UE behavior parameters that the AF may have provisioned externally.

If the expected UE behavior parameter subscription is provided by the NF, the subscription may include a threshold value indicating that the parameter can be notified to the NF by the UDM only when the parameter meets a specific confidence and/or accuracy level. Meeting the threshold condition may mean that the confidence/accuracy level of the parameter is equal to a specific threshold, less than a specific threshold, greater than a specific threshold, less than a specific threshold, greater than a specific threshold, equal to or less than a specific threshold, or equal to or greater than a specific threshold. The threshold value may be in the form of a range (e.g., from a minimum value to a maximum value, each optionally inclusive or exclusive) or a specific value.

0b. [Conditional action, using values supported by NWDAF] The AF may subscribe to the NWDAF through the NEF to learn UE mobility analysis and/or UE communication analysis for a UE or a UE group by applying the procedure specified in clause 6.1.1.2 of TS 23.288 V18.1.0.

0c. [Conditional action, using values supported by NWDAF] The AF may verify the received data and derive one of the expected UE behavior parameters for the UE or the UE group.

1. The AF may include one or more parameters to be created, updated, or deleted in an Nnef_ParameterProvision_Create message, an Nnef_ParameterProvision_Update message, or an Nnef_ParameterProvision_Delete request message to the NEF. The parameters may include a corresponding confidence and/or accuracy level.

The AF provides a target UE identifier (e.g., GPSI or External Group ID). A transaction reference ID identifies a transaction request between the NEF and the AF. In the case of Nnef_ParameterProvision_Create, the NEF assigns a transaction reference ID to the Nnef_ParameterProvision _Create request.

The NEF identifies the requester's identifier (i.e., AF identifier) to confirm whether the requester can perform the requested service operation.

In the case of a creation request associated with a 5G VN group, the external group ID identifies the 5G VN group.

The payload of the Nnef_ParameterProvision _Update request may include one or more of the following parameters:
- Expected UE Behaviour parameters; or
- Network configuration parameters; or
- 5G VN group data, or
- 5G VN group membership management parameters; or
- Location Privacy Indication parameters of the "LCS privacy" Data Subset of the Subscription Data; or
- MTC provider information; or
- AF provided ECS Address Configuration Information; or
- DNN and S-NSSAI specific Group Parameters.
- Application-specific expected UE behavior parameters

The AF may request to delete the 5G VN configuration by transmitting Nnef_ParameterProvision_Delete to the NEF.

2. If the AF is authorised to provision parameters from the NEF, the NEF may transmit an Nudm _ParameterProvision _Create, Nudm _ParameterProvision _Update, or Nudm _ParameterProvision_Delete request message. Through these messages, the NEF may request to create, update, and store or delete the provisioned parameters as part of subscription data. These messages may include the provided data, the NEF reference ID, and optionally MTC provider information.

If the AF does not have authority to provision the parameters, the NEF may perform step 6. For example, the NEF may include a failure cause in the Nnef_ParameterProvision _Create/Update/Delete response message in step 6. In this case, step 7 does not apply.

If the NEF has not received the DNN and/or S-NSSAI from the AF and the corresponding information is configured as needed within the 5GC, the NEF may determine the DNN and/or S-NSSAI from the AF identifier.

If the AF provides DNN and S-NSSAI specific group parameters, the AF shall indicate the external group ID, target DNN, and S-NSSAI in the request message.

If the AF provides a service area in the form of geographical information, the NEF maps the corresponding geographical information to a TA list.

The UDM may read the corresponding subscription information from the UDR through Nudr_DM_Query to validate the required data update and authorize these changes for the corresponding subscriber or group for the corresponding AF.

Based on local configuration, the UDM may store the parameters in the UDR after checking whether there is a requirement for a threshold condition that the provisioned parameters must satisfy. If the requirements are met, the UDM can smoothly perform related operations. If the requirements are not met, step 5 is triggered as a failed procedure and a related cause value is provided (e.g., "confidence level not sufficient"). In this case, step 4 may be omitted.

4. If the AF is authorized by the UDM so that the AF can provision parameters for this subscriber, the UDM may translate the GPSI into a SUPI. Then, the UDM may request the UDR to create, update, or delete the provisioned parameters as part of the subscriber data through an Nudr_DM_Create/Update/Delete request message. The message transmitted by the UDM to the UDR may include the provisioned data.

When a new 5G VN group is created, the UDM assigns a unique internal group ID for the 5G VN group and may include the newly assigned internal group ID in the Nudr_ DM _Create Request message. When the list of 5G VN group members is changed or the 5G VN group data is changed, the UDM may update the UE and/or group subscription data according to the AF/NEF request.

5. The UDM responds to the request of the NEF by transmitting an Nudm_ParameterProvision _Create/Update/Delete response message. If the procedure fails, the reason is indicated in the cause value.

6. The NEF responds to the request of the AF with an Nnef_ParameterProvision _Create/Update/Delete response. If the procedure fails, the reason is indicated in the cause value.

7. [Conditional action, this step is performed only after step 4 is successful] The UDM may notify the subscribed network function (e.g., AMF) of the updated UE and/or group subscription data through an Nudm _SDM _Notification Notify message.
a) If the NF is an AMF, the UDM performs an Nudm_SDM _Notification (SUPI or internal group identifier, AMF-associated expected UE behavior parameters, subscribed periodic registration timer, subscribed active time, 5G VN group data, or DNN and S-NSSAI related group parameters, etc.) service operation. When the AMF receives a confidence and/or accuracy level according to the expected UE behavior parameters, the AMF may use the related confidence and/or accuracy level when processing the expected UE behavior parameters. The AMF uses the received parameters to derive an appropriate UE configuration of NAS parameters and derives core network assisted RAN parameters. The AMF may determine a registration area based on a stationary indication or expected UE moving trajectory parameters.
b) If the NF is an SMF, the UDM performs an Nudm_SDM _Notification (SUPI or internal group identifier, SMF-associated expected UE behavior parameter set, DNN/S-NSSAI, suggested number of downlink packets, 5G VN group data, etc.) service operation.

The SMF stores the received parameters and associates them with a PDU session based on the DNN and S-NSSAI included in the message from the UDM.

Examples of Expected UE Behaviour parameters are described in detail.

The expected UE behavior parameters characterize the expected behavior of a UE or a UE group. Such parameter sets may be provided through the NEF so that they can be stored as part of subscriber data. Each parameter within the expected UE behavior must have an associated validity time. The validity time indicates when the expected UE behavior parameter expires, and it should be deleted by the related NF. The validity time may be set to indicate that a specific expected UE behavior parameter has no expiration time. When the validity time expires, the related NF deletes the local copy of the related expected UE behavior parameter. In addition, each parameter within the expected UE behavior may be associated with a confidence and/or accuracy level. The confidence level represents a probability assertion for the associated expected UE behavior parameter, and the accuracy level represents the performance of an estimator (e.g., AI/ML model) used for prediction. The provisioning procedure of the expected UE behavior is realized by the external parameter provisioning procedure, as described in the example of FIG. 8.

The expected UE behavior parameters are stored as AMF-associated expected UE behavior parameters based on a per UE level and SMF-associated expected UE behavior parameters at the PDU session level of the UDM. The AMF retrieves from the UDM the AMF-Associated Expected UE Behaviour parameters which may be related to both PDU sessions and SMS delivery. The SMF retrieves from the UDM the SMF-associated expected UE behavior parameters for a specific PDU session. The AMF and the SMF use the expected UE behavior parameters.

**[Table 3]**

| Expected UE Behaviour parameter | Description |
|---|---|
| Expected UE Moving Trajectory | Identifies the UE's expected geographical movement |
| | Example: A planned path of movement |
| Stationary Indication | Identifies whether the UE is stationary or mobile [optional] |
| Communication Duration Time | Indicates for how long the UE will normally stay in CM-CONNECTED for data transmission. |
| | Example: 5 minutes. [optional] |
| Periodic Time | Interval Time of periodic communication |
| | Example: every hour. [optional] |
| Scheduled Communication Time | Time and day of the week when the UE is available for communication. |
| | Example: Time: 13:00-20:00, Day: Monday. [optional] |
| Battery Indication | Identifies power consumption criticality for the UE: if the UE is battery powered with not rechargeable/not replaceable battery, battery powered with rechargeable/replaceable battery, or not battery powered. [optional] |
| Traffic Profile | Identifies the type of data transmission: single packet transmission (UL or DL), dual packet transmission (UL with subsequent DL or DL with subsequent UL), multiple packets transmission [optional] |
| Scheduled Communication Type | Indicates that the Scheduled Communication Type is Downlink only or Uplink only or Bi-directional [To be used together with Scheduled Communication Time] |
| | Example: <Scheduled Communication Time>, DL only. [optional] |
| Expected Time and Day of Week in Trajectory | Identifies the time and day of week when the UE is expected to be at each location included in the Expected UE Moving Trajectory. [optional] |

Table 3 shows an example of a description for Expected UE Behaviour parameters.

The expected Moving Trajectory and the Expected Time and Day of the trajectory can be used by the AMF. All other parameters can be used by both the AMF and the SMF.

The scheduled communication type and traffic profile should not be used by the AMF to release the UE when the NAS release assistance information of the UE is available.

In the case of an NB-IoT UE, parameters may be delivered to the RAN to optimize Uu resource allocation for NB-IoT UE differentiation.

Research on FS_SOBOT (Study on Network of Service Robots with Ambient Intelligence) is being performed as a 3GPP R19 item.

Among the use cases currently included in TR 22.916 V0.3.0, there is as yet no discussion on a method for adjusting the accuracy level of service robots and related groups.

Various embodiments of the present specification describe 5G system functions and procedures capable of dynamically and/or effectively adjusting the accuracy level of service robots and related groups based on an application request targeting 5G evolution/6G systems.

For reference, although various examples of the disclosure of the present specification are described based on operations of entities included in a 5G system, this is merely an example. That is, the scope of the disclosure of the present specification is not limited by operations based on a 5G system. For example, various examples of the disclosure of the present specification can be applied not only to 5G evolution systems (e.g., 5G systems after 3GPP release 20) but also to 6G systems and communication systems after 6G.

In particular, beyond the configuration of a network operator, service robot-related services can be provided more dynamically by a dynamic request from an AF of a 3rd party business partner.

As described above with reference to FIGS. 7a and 7b, since a robot working group (e.g., service robots) can build a 3D map only with a required level of accuracy, it is not necessary to consume computing and communication resources to build a 3D map of an excessively accurate area. For critical areas, the robot can adjust the accuracy level.

However, according to the prior art, in 5G, various services such as robot services are being discussed. However, there is a problem that the accuracy level of a service cannot be dynamically and/or effectively adjusted.

According to the disclosure of the present specification, an appropriate accuracy level is expected to be configured in several mechanisms, and a specific critical area of interest can be determined by the 5G system according to a request of a 3rd party robot application (e.g., a leader robot application of a robot group or an application of a cloud server). This may be based on a request of a 3rd party application. To satisfy requests that can be dynamically updated according to levels of interest and efficiency, the 5G system may also expose information related to the 'accuracy level' of the corresponding area to the 3rd party application.

Regarding the challenges and potential gaps described above, the following examples may be added.

According to the prior art, based on a request of a 3rd party application (e.g., an application of a leader robot in a robot group or an application of a cloud server), there was a problem that the 5G system could not determine a specific area where the system can adjust the accuracy level. In addition, a specific area where the accuracy level can be adjusted could not be determined according to the request of the 3rd party application. The 5G system could not provide a means for exposing information related to the "accuracy level" of the corresponding area to the 3rd party application.

According to the disclosure of the present specification, based on a request of a 3rd party application (e.g., an application of a leader robot in a robot group or an application of a cloud server), the 5G system may determine a specific area where the system can adjust the accuracy level. In addition, a specific area where the accuracy level can be adjusted can be determined according to the request of the 3rd party application. The 5G system may provide a means for exposing information related to the "accuracy level" of the corresponding area to the 3rd party application.

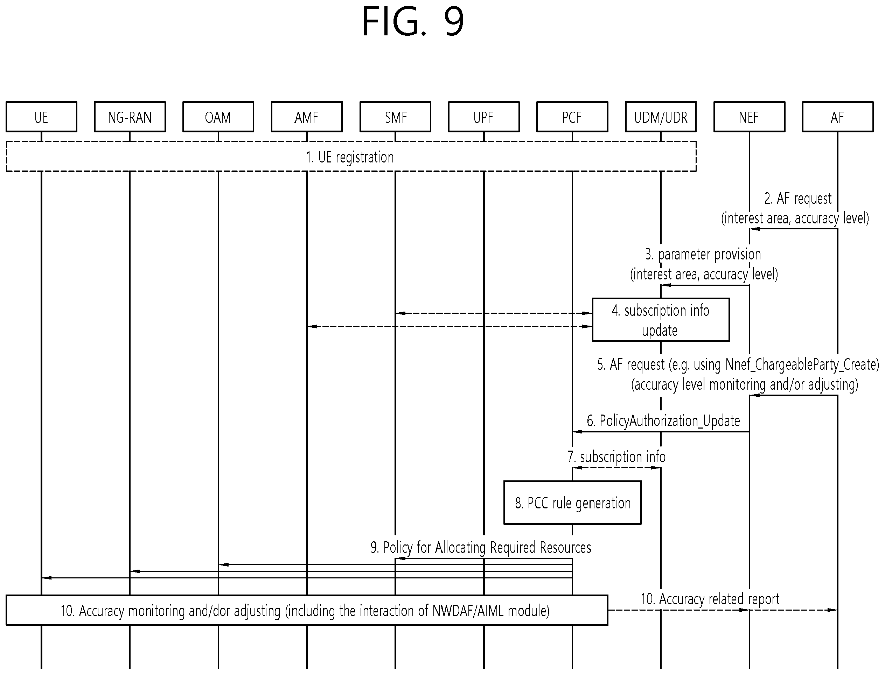

Hereinafter, a procedure according to an embodiment of the disclosure of the present specification will be described with reference to FIG. 9.

The following drawings are prepared to describe a specific example of the present specification. Since specific names of apparatuses or specific names of signals/messages/fields described in the drawings are presented by way of example, the technical features of the present specification are not limited to the specific names used in the drawings below.

**FIG. 9** **illustrates an example of a procedure according to an embodiment of the present specification.**

An embodiment based on the example of FIG. 9 is an example of a procedure for adjusting an accuracy level by a request from an application located in a cloud server.

Outside the 5GC, such as a 3rd party AF, a request to adjust/increase/decrease the accuracy level in a specific area may be made. The 5GC and the terminal may perform operations to adjust the accuracy level. Such operations may include, for example, an operation of increasing/decreasing a rate at which the terminal enables/activates a sensor, an operation of network nodes performing resource scheduling or pre-allocating resources to meet the accuracy level, and adjustment of QoS parameters for exchange of accuracy-related information.

Such operations allow the operation at the corresponding node/terminal to be performed through a subscriber information update and PCC policy update procedure by the request of the AF.

1. The UE may perform a registration procedure with the 5GS. The UE may also perform a PDU session(s) establishment procedure required for additional services.

2. The AF may transmit an AF request message to the NEF. For example, the AF may transmit an AF request message for external parameter provision to the NEF. The AF request message may include information necessary to adjust the accuracy level for a service robot and a group. For example, the AF request message may include information related to an interest area and information related to an accuracy level.

Based on a business pre-agreement or an operator policy, the 5GC may determine whether to accept the request of the AF.

The AF request message may include parameters as shown in the example of Table 4. For reference, the parameters in Table 4 are merely examples, and the scope of the disclosure of the present specification is not limited by the parameters included in Table 4.

**[Table 4]**

| Parameter | Description |
|---|---|
| Default Accuracy level NOTE 1 applies | Identifies the requested default Accuracy level applicable to each UE within a group. |
| | [optional] |
| Interest area for Accuracy (NOTE 1) | Identifies the AF-requested Service Area applicable to each UE within a group. [optional] |
| | A new parameter is defined to represent the corresponding area, but this is merely an example. As an area of interest for accuracy, an expanded concept of the service area concept of the prior art may be applied, or the service area concept of the prior art may be utilized as it is. |
| NOTE 1: These parameters are applicable per DNN and S-NSSAI. | |
| As one of the embodiments, the parameter may be applied based on per DNN and S-NSSAI. However, this is merely an example, and the granularity (e.g., per DNN or per S-NSSAI, etc.) to which the parameter is applied may be expanded for each scenario or may be applied for each scenario. | |

Table 4 is an example of parameters included in an AF request message. The example of Table 4 includes descriptions of specific parameters related to an accuracy level.

3. The NEF may transmit a message related to parameter provision to the UDM/UDR. For example, using an Nudm_ParameterProvision service operation, the NEF may transmit a message including information included in the AF request to the UDM/UDR.

For example, the message related to parameter provision may include information related to an interest area and information related to an accuracy level.

4. The UDM/UDR may add/update subscriber information based on the received information. Through a subscriber information update procedure of the prior art, the UDM/UDR may deliver the updated subscriber information to the AMF and the SMF. Through this process, accuracy level related specific parameters received from the AF may be delivered to a control network node of the 5GC. Each control network node may perform a procedure for adjusting accuracy based on the corresponding information.

5. The AF may transmit an AF request message to the NEF. The AF request message may include information requesting to monitor the accuracy level and/or information requesting to adjust the accuracy level.

Step 5 is a step independent of the step in which subscriber information is updated based on the request of the AF, and the AF may request monitoring and/or adjusting of the accuracy level to the NEF through the AF request. For example, step 4 and step 5 may be performed independently. Similar to the parameters included in Table 4, the AF request message may include interest area information and a requested accuracy level.

6. By the NEF, information included in the request message received from the AF is transmitted to the PCF and used to generate a PCC rule. Based on the request of the AF, an appropriate PCC rule to enforce a policy, such as a procedure for monitoring the accuracy level and reserving necessary network resources, may be generated.

7. The UDM/UDR may deliver subscriber information to the PCF. Step 7 may be performed as an independent step.

8. The PCF may generate a PCC rule. For example, the PCC rule may include information for monitoring/processing/reporting of an appropriate accuracy level.

9. The PCF may transmit a policy for allocating resources necessary for monitoring and/or adjusting the accuracy level to the UE, NG-RAN, OAM, AMF, SMF, and the like.

For example, based on the AF request, the PCF may deliver the generated PCC rule to an appropriate network node, NG-RAN, OAM, and/or UE, etc.

10. Entities (UE, NG-RAN, OAM, AMF, SMF, UPF, etc.) included in the 5GC may perform accuracy monitoring and/or accuracy adjustment.

The entities included in the 5GC may transmit a report message related to accuracy to the AF via the NEF. For example, based on the AF request, collected information and/or monitored information may be exposed to the AF. Additionally, information provided to the AF in step 10 may include, in addition to the collected information and/or monitoring information, information regarding an accuracy level acceptable in the system at a specific area/specific time point.

For reference, interaction with an NWDAF module and/or an AIML module may also be performed in step 10. Although not described in the example of FIG. 9, the NWDAF of the 5GC may be involved in collection/monitoring/processing of information. For example, the NWDAF may participate in collection/monitoring/processing of information based on analytics (statistics and prediction) of the information.

According to an embodiment of the disclosure of the present specification including the example of FIG. 9, the 5G system may adjust the accuracy level of clock synchronization based on a request of an application (e.g., an application of a leader robot in a robot group or an application of a cloud server).

Possible scenarios in relation to the referenced robot group may include an "automated robot group", a "fully autonomous robot group", a "remotely operated robot group", and a group configured by appropriately combining these types of robots.

Regarding the adjustment of the accuracy level of clock synchronization, details described in various examples of the disclosure of the present specification and exposed network functions may be applied.

According to an embodiment of the disclosure of the present specification, the following example scenario may be considered.

Energy-efficient robots may collaborate to jointly perform specific tasks in fields of interest, such as cleaning, disinfection, and agriculture. Tasks can be adjusted according to environmental conditions to emphasize accuracy while optimizing computing and communication resources.

The following drawings are prepared to describe a specific example of the present specification. Since specific names of apparatuses or specific names of signals/messages/fields described in the drawings are presented by way of example, the technical features of the present specification are not limited to the specific names used in the drawings below.

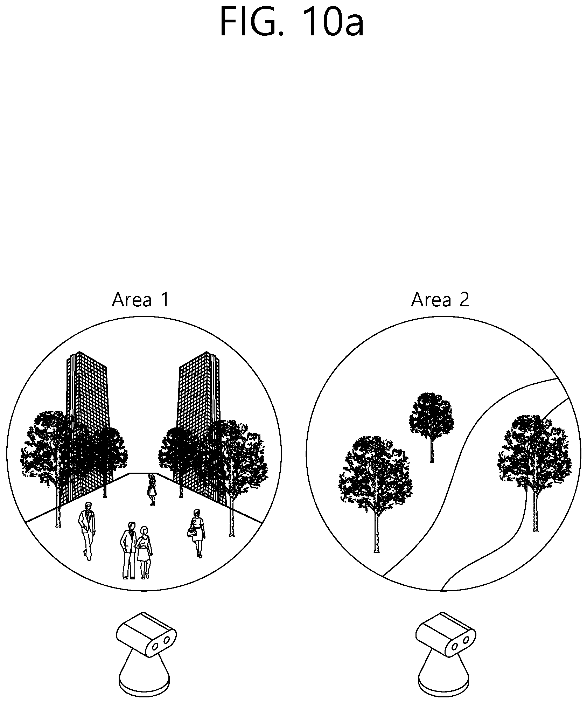

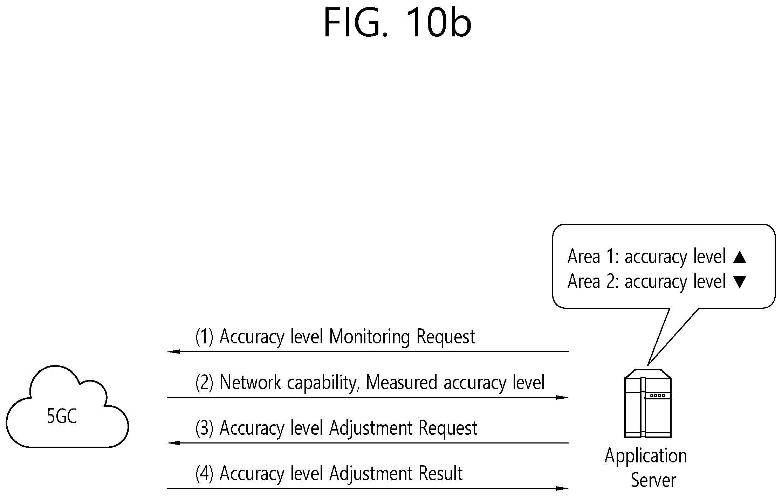

**FIGS. 10a** **and** **10b** **are examples of scenarios for adjusting a clock synchronization accuracy level according to an embodiment of the present specification.**

FIGS. 10a and 10b illustrate examples of scenarios for adjusting a clock synchronization accuracy level.

Referring to FIG. 10a, Area 1 and Area 2 are shown. Area 1 is an area with higher complexity than Area 2. For example, Area 1 may be a place such as a train station plaza with many people. Area 2 may be an area with lower complexity than Area 1. For example, Area 2 may be a place such as a park with fewer people than Area 1.

When a UE (e.g., a robot) is located in Area 1, a high accuracy level may be required for the UE or an application of the UE to provide a service or receive a service in a complex environment. On the other hand, when the UE is located in Area 2, a relatively lower accuracy level than in Area 1 may be required.

The application server may recognize that higher accuracy clock synchronization is required in a more complex environment of interest (e.g., Area 1 of FIG. 10a).

Specifically, as shown in FIG. 10b, the application server may perform communication related to the accuracy level with the 5GC.

For example, operations (1) to (4) may be performed.
(1) The application server may request the 5G system to monitor the accuracy level for clock synchronization.
(2) Based on the application request, the 5G system may perform monitoring and report the measured results to the application server. In addition, the 5G system may transmit network capability information (e.g., an accuracy check function) to the application server.
(3) The application server may transmit an accuracy level adjustment request to the 5GC. For example, when the UE moves from Area 1 to Area 2, the application server may request to lower the accuracy level. In the opposite case, the application server may request to increase the accuracy level.

In order to maintain an appropriate accuracy level required for a robot application in a specific area, the application server may request the 5G system to adjust the accuracy level.

The 5G system must be able to provide a means to guarantee a very high accuracy level of clock synchronization. This is to support a service robot group to build a 3D map of an accuracy level required in the application layer through collaboration (i.e., synchronization between service robots in a collaborating group and synchronization between various sources related to each service robot). Clock synchronization accuracy is provided by the 5G system to support applications requiring time-sensitive communication. For example, the accuracy level of clock synchronization is 900ns.

For reference, the 5G system provides clock synchronization accuracy to support applications requiring time-sensitive communication. A higher accuracy level may be expected depending on requirements in the robot application layer. In a scenario where several robot groups are connected to each other through multi-hop, the current clock synchronization accuracy level (e.g., cooperative transport - fragile workpieces) may not be sufficient. In addition, there is a discussion that a smaller clock synchronization budget may be required to support a collaborative robot (cobot) scenario in which an additional network element is present in a robot behind a UE.

Depending on a request of an application (e.g., a leader robot application of a robot group or an application of a cloud server), the 5G system must be able to provide a means to determine a specific area where the system can adjust the clock synchronization accuracy level and expose a network function (e.g., a "clock synchronization accuracy level" monitoring function) and monitoring results (e.g., an accuracy level measured in an area of interest) to the application.

For reference, possible scenarios in relation to the referenced robot group include an "automated robot group", a "fully autonomous robot group", a "remotely operated robot group", and a group configured by appropriately combining these types of robots.

The following drawings are prepared to describe a specific example of the present specification. Since specific names of apparatuses or specific names of signals/messages/fields described in the drawings are presented by way of example, the technical features of the present specification are not limited to the specific names used in the drawings below.

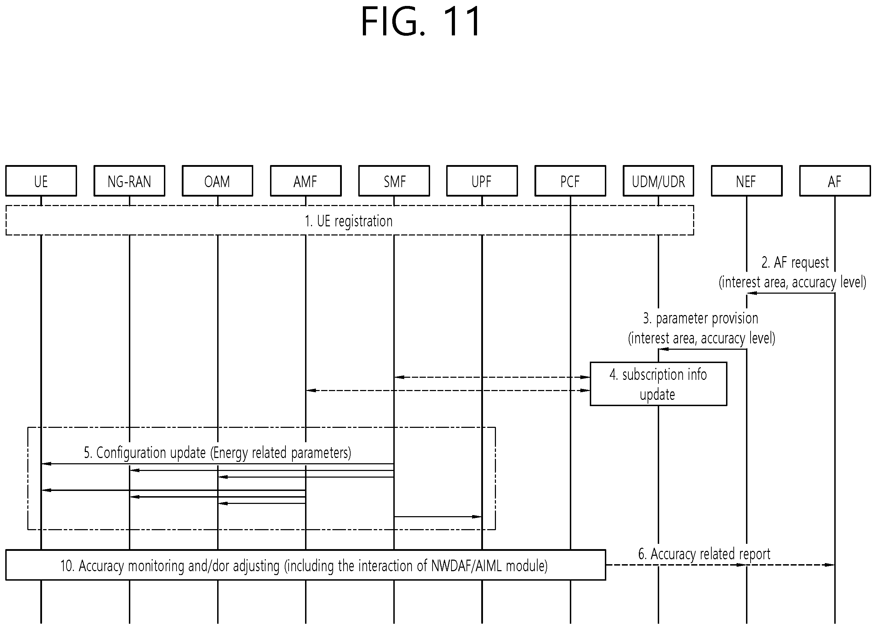

FIG. **11** **is an example of a procedure related to updating subscriber information according to an embodiment of the present specification.**
1. The UE may perform a registration procedure with the 5GS. The UE may also perform a PDU session(s) establishment procedure required for additional services.
2. The AF may transmit an AF request message to the NEF. For example, the AF may transmit an AF request message for external parameter provision to the NEF.

The AF may request monitoring and/or adjusting of the accuracy level to the NEF through the AF request. In this case, similar to the parameters included in Table 4, interest area information and a requested accuracy level may be included.

For example, the AF request message may include information related to an interest area and information related to an accuracy level.

The AF request message may include parameters as shown in the example of Table 4. For reference, the parameters in Table 4 are merely examples, and the scope of the disclosure of the present specification is not limited by the parameters included in Table 4.

3. The NEF may transmit a message related to parameter provision to the UDM/UDR. For example, using an Nudm _ParameterProvision service operation, the NEF may transmit a message including information included in the AF request to the UDM/UDR.

For example, the message related to parameter provision may include information related to an interest area and information related to an accuracy level.

The UDM/UDR may add/update subscriber information based on the information received in step 3). Through a subscriber information update procedure of the prior art, the UDM/UDR may deliver the updated subscriber information to the AMF and the SMF. Through this process, accuracy level related specific parameters received from the AF may be delivered to a control network node of the 5GC. Each control network node may perform a procedure for adjusting accuracy based on the corresponding information.

A configuration update procedure may be performed. For example, energy-related parameters may be provided to the UE, NG-RAN, OAM, AMF, SMF, UPF, and the like. The energy-related parameters may be parameters based on the information in step 4).

For example, some or all of the information transmitted by the UDM/UDR may be delivered transparently to a base station, OAM, and a terminal. Alternatively, some or all of the information transmitted by the UDM/UDR may be processed and delivered to the base station, OAM, and the terminal. Such information may be used to apply an energy-related policy. In this example, a specific message used to transmit information is not designated, but AS/NAS/N2 messages of the prior art may be utilized as such messages, or a procedure based on a newly defined message may be used.

As a specific example, the base station and/or the terminal (e.g., UE) may perform the following operations.

The base station (e.g., NG-RAN) may receive a clock synchronization accuracy related configuration that the NG-RAN can understand through the AMF/SMF. For example, the NG-RAN may receive a QoS profile including the configuration, or the NG-RAN may receive a clock adjustment profile (e.g., a new profile defined in the disclosure of the present specification) including the configuration. The profile received by the NG-RAN may include information related to parameters and threshold values (e.g., threshold values when not pre-configured in the NG-RAN) related to clock synchronization accuracy to be monitored/reported by the NG-RAN, specific operations to be performed, and the like.

The base station (e.g., NG-RAN) may perform resource scheduling and assignment for clock synchronization accuracy adjustment of a specific UE. In addition, the base station (e.g., NG-RAN) may adjust bearer modification and QoS for clock synchronization accuracy adjustment of a specific UE. The base station (e.g., NG-RAN) may monitor results related to the clock synchronization accuracy adjustment.

The terminal (e.g., UE) may receive a clock synchronization accuracy related configuration through the SMF.

For example, the terminal (e.g., UE) may receive a QoS profile including the configuration, or the terminal (e.g., UE) may receive a clock adjustment profile (e.g., a new profile defined in the disclosure of the present specification) including the configuration. The profile received by the terminal may include information related to parameters and threshold values (e.g., threshold values when not pre-configured in the terminal) related to clock synchronization accuracy to be monitored/reported by the terminal, specific operations to be performed, and the like.

The terminal may determine a specific area and an accuracy level required in the corresponding area. Based on a policy received from a network, the terminal may adjust enable/disable of a physical sensor for clock synchronization accuracy adjustment and monitor results related to the clock synchronization accuracy adjustment.

A control network node (e.g., SMF) within the 5GC may transmit an energy-related configuration to the UPF through an N4 message of the prior art. Based on this, the UPF may monitor clock synchronization accuracy related information according to measurable granularity.

6. Based on the collected information and/or monitored information and the AF request, the corresponding information may be exposed to the AF. In addition to the collected/monitored information, it may also include information regarding an accuracy level acceptable in the system at a specific area/specific time point.

For reference, interaction with an NWDAF module and/or an AIML module may also be performed in step 6. Although not described in the example of FIG. 11, the NWDAF of the 5GC may be involved in collection/monitoring/processing of information. For example, the NWDAF may participate in collection/monitoring/processing of information based on analytics (statistics and prediction) of the information.

For example, the NWDAF may generate prediction information related to monitoring of the accuracy level of the service and/or prediction information related to adjustment of the accuracy level.

The following drawings are prepared to describe a specific example of the present specification. Since specific names of apparatuses or specific names of signals/messages/fields described in the drawings are presented by way of example, the technical features of the present specification are not limited to the specific names used in the drawings below.

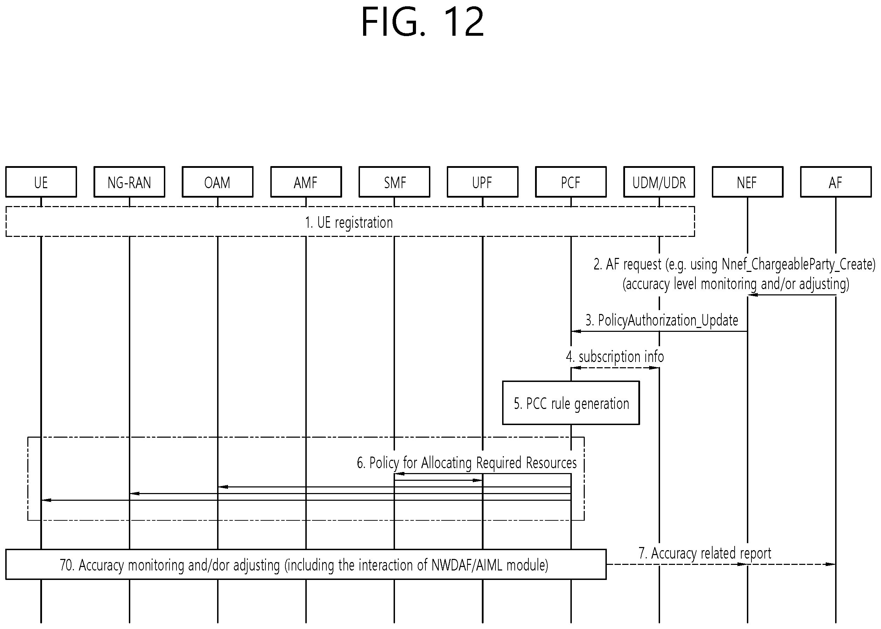

**FIG. 12** **illustrates a procedure related to updating a PCC rule according to an embodiment of the present specification.**
1. The UE may perform a registration procedure with the 5GS. The UE may also perform a PDU session(s) establishment procedure required for additional services.
2. The AF may transmit an AF request message to the NEF. For example, the AF may transmit an AF request message for external parameter provision to the NEF.

The AF may request monitoring and/or adjusting of the accuracy level to the NEF through the AF request. In this case, similar to the parameters included in Table 4, interest area information and a requested accuracy level may be included.

For example, the AF request message may include information related to an interest area and information related to an accuracy level.

The AF request message may include parameters as shown in the example of Table 4. For reference, the parameters in Table 4 are merely examples, and the scope of the disclosure of the present specification is not limited by the parameters included in Table 4.

3. By the NEF, information included in the request message received from the AF is transmitted to the PCF and used to generate a PCC rule. Based on the request of the AF, an appropriate PCC rule to enforce a policy, such as a procedure for monitoring the accuracy level and reserving necessary network resources, may be generated.

4. The UDM/UDR may deliver subscriber information to the PCF. Step 4 may be performed as an independent step.

5. The PCF may generate a PCC rule. For example, the PCC rule may include information for monitoring/processing/reporting of an appropriate accuracy level.

The generated PCC rule may include a combination of information included in the example of Table 5 below, and the scope of the disclosure of the present specification is not limited by Table 5.

**[Table 5]**

| Information name | Description | Category | PCF permitted to modify in a UE context in the AMF | Scope |
|---|---|---|---|---|
| ... | | | | |
| Clock synchronization accuracy level adjustment | This part defines parameters to adjust Clock synchronization accuracy level | | | |
| Area of Interest | List of specific TAIs | Conditional | Yes | UE context |
| Target accuracy level | Indicates target accuracy level for monitoring and/or adjusting | Conditional | Yes | UE context |
| Threshold of accuracy level | Defines (if needed) the default and/or standard value for accuracy level monitoring | Conditional | Yes | UE context |
| Adjustment action | Defines the specific behaviour e.g., Resource assignment or scheduling, etc. | Conditional | Yes | UE context |

The example of Table 5 shows an example of access and mobility related policy information.

A control network node (e.g., SMF) within the 5GC may transmit an energy-related configuration to the UPF through an N4 message of the prior art. Based on this, the UPF may monitor clock synchronization accuracy related information according to measurable granularity.

6. The PCF may transmit a policy for allocating resources necessary for monitoring and/or adjusting the accuracy level to the UE, NG-RAN, OAM, AMF, SMF, and the like.

For example, based on the AF request, the PCF may deliver the generated PCC rule to an appropriate network node, NG-RAN, OAM, and/or UE, etc.

7. Based on the collected information and/or monitored information and the AF request, the corresponding information may be exposed to the AF. In addition to the collected/monitored information, it may also include information regarding an accuracy level acceptable in the system at a specific area/specific time point.

For reference, interaction with an NWDAF module and/or an AIML module may also be performed in step 7. Although not described in the example of FIG. 12, the NWDAF of the 5GC may be involved in collection/monitoring/processing of information. For example, the NWDAF may participate in collection/monitoring/processing of information based on analytics (statistics and prediction) of the information. For example, the NWDAF may generate prediction information related to monitoring of the accuracy level of the service and/or prediction information related to adjustment of the accuracy level.

The following drawings are prepared to describe a specific example of the present specification. Since specific names of apparatuses or specific names of signals/messages/fields described in the drawings are presented by way of example, the technical features of the present specification are not limited to the specific names used in the drawings below.

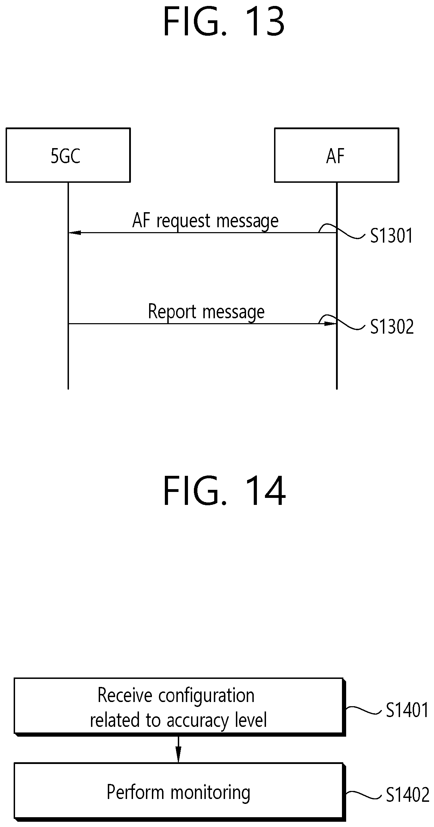

**FIG. 13** **illustrates an example of an operation of an AF according to an embodiment of the present specification.**

For reference, the procedure illustrated in FIG. 13 is merely an example, and the scope of the disclosure of the present specification is not limited by the example of FIG. 13.

For example, with respect to the example of FIG. 13, the operations described in the examples of FIGS. 1 to 12 may also be applied. For example, even for operations, contents, etc., not directly described in the example of FIG. 13, the operations, contents, etc., described in various examples of the disclosure of the present specification may be applied.

Here, the operations performed by the 5GC may be performed by one or more of the entities included in the 5GC.

In step S1301, the AF may transmit an AF request message to the 5GC.

For example, the AF may transmit the AF request message to the NEF.

For example, the AF request message may include one or more parameters related to an accuracy level of a service for the UE. The one or more parameters may include information related to the accuracy level and an area of interest related to the accuracy level.

The one or more parameters may be transmitted to the PCF in order for one or more entities included in the 5GC to adjust the accuracy level and/or generate a policy used to perform monitoring related to the accuracy level.

For example, the accuracy level may be an accuracy level related to clock synchronization accuracy.

For example, the one or more entities may include one or more of a UE, a base station, an OAM, an AMF, an SMF, a UPF, and/or a PCF.

For example, the NEF may transmit a policy authorization update message including the one or more parameters to the PCF.

For example, the PCF may generate a policy for one or more entities included in the 5GC to adjust the accuracy level and/or perform monitoring related to the accuracy level. The PCF may transmit the generated policy to the 5GC.

For example, the policy generated by the PCF may include one or more information among information related to clock synchronization accuracy level adjustment, information related to an area of interest, information related to a target accuracy level, information related to a threshold of the accuracy level, and/or information related to an adjustment action.

In step S1302, the AF may receive a report message.

For example, the AF may receive a report message related to the accuracy level from the 5GC.

For example, the report message may include information related to monitoring of the accuracy level of the service and/or information related to adjustment of the accuracy level.

The following drawings are prepared to describe a specific example of the present specification. Since specific names of apparatuses or specific names of signals/messages/fields described in the drawings are presented by way of example, the technical features of the present specification are not limited to the specific names used in the drawings below.

**FIG. 14** **illustrates an example of an operation of a terminal according to an embodiment of the present specification.**

For reference, the procedure illustrated in FIG. 14 is merely an example, and the scope of the disclosure of the present specification is not limited by the example of FIG. 14.

For example, with respect to the example of FIG. 14, the operations described in the examples of FIGS. 1 to 13 may also be applied. For example, even for operations, contents, etc., not directly described in the example of FIG. 14, the operations, contents, etc., described in various examples of the disclosure of the present specification may be applied.

The operations illustrated in FIG. 14 may be performed for the UE.

However, this is merely an example, and a base station may perform the operations illustrated in FIG. 14.

In step S1401, the UE may receive a configuration related to an accuracy level.

For example, the UE may receive a configuration related to an accuracy level of a service for the UE from the SMF.

For example, the configuration may include information related to an area of interest and information related to an accuracy level related to the area of interest.

The accuracy level may be an accuracy level related to clock synchronization accuracy.

For example, based on the configuration, the UE may determine an accuracy level required at a location of the UE. In this case, the UE may adjust the accuracy level based on the determined accuracy level.

In step S1402, the UE may perform monitoring. For example, the UE may perform monitoring related to the accuracy level based on the configuration.

As an example, the UE may perform monitoring related to the accuracy level required at the location of the UE based on the configuration.

For example, the UE may transmit a report message related to the accuracy level to the AF. The report message may include information related to monitoring of the accuracy level of the service and/or information related to adjustment of the accuracy level.

According to an embodiment of the disclosure of the present specification, the NEF may receive accuracy level related specific parameters from a first network node (e.g., AF). The NEF may cause the UDM/UDR to update subscriber information.

According to an embodiment of the disclosure of the present specification, the PCF may receive an accuracy level related specific request from a first network node (e.g., AF). Based on the accuracy level related specific request, the PCF may generate a policy regarding resource allocation and the like for performing a specific accuracy level in a specific area. The PCF may transmit the generated policy to the terminal and other network nodes included in the 5GC.

According to an embodiment of the disclosure of the present specification, a base station (e.g., NG-RAN) may receive a profile (e.g., QoS profile). For example, the PCF may generate a clock synchronization accuracy level related PCC rule. The PCF may transmit the PCC rule to the NG-RAN via the AMF/SMF. For example, the NG-RAN may receive a profile (e.g., a profile based on a PCC rule) that the NG-RAN can understand. For example, the NG-RAN may receive a QoS profile including the PCC rule, or the NG-RAN may receive a clock adjustment profile (e.g., a new profile defined in the disclosure of the present specification) including the PCC rule. The profile received by the NG-RAN may include information related to parameters and threshold values (e.g., threshold values when not pre-configured in the NG-RAN) related to clock synchronization accuracy to be monitored/reported by the NG-RAN, specific operations to be performed, and the like. The base station (e.g., NG-RAN) may adjust resource scheduling and assignment, bearer modification, and QoS for clock synchronization accuracy adjustment of a specific UE. The NG-RAN may monitor results related to the clock synchronization accuracy adjustment. The NG-RAN may report monitoring results to other network nodes of the 5GC, such as the AMF/SMF.

According to an embodiment of the disclosure of the present specification, a terminal (e.g., UE) may perform operations as in the following example. The terminal may receive information related to a PCC rule related to a clock synchronization accuracy level generated by the PCF. For example, the terminal may receive the clock synchronization accuracy level related PCC rule in the form of a UE policy of the prior art. The terminal may receive the PCC rule from the PCF via the SMF of the 5GC.

For example, the terminal may receive a QoS rule including the PCC rule, or the terminal may receive a clock adjustment rule (e.g., a new rule defined in the disclosure of the present specification) including the PCC rule. The rule received by the terminal may include information related to parameters and threshold values (e.g., threshold values when not pre-configured in the NG-RAN) related to clock synchronization accuracy to be monitored/reported by the terminal, specific operations to be performed, and the like. The terminal may determine a specific area and an accuracy level required in the corresponding area. Based on a policy received from the network, the terminal may adjust enable/disable of a physical sensor for clock synchronization accuracy adjustment and monitor results related to the clock synchronization accuracy adjustment. The terminal may report monitoring results to other network nodes of the 5GC (e.g., AMF/SMF, etc.). Alternatively, the terminal may directly report results to an AF outside the 5GC based on an application layer through a user plane.

The present specification may have various effects.

For example, based on a request of an application (e.g., a request of an AF), an accuracy level of a service robot and a related group may be dynamically/effectively adjusted.

For example, according to the disclosure of the present specification, enhanced functions of network nodes (e.g., AF, UPF, PCF, NWDAF, etc.) are supported targeting a 5G evolution/6G system in a zero-touch configuration/operation environment where network automation is expanded.

For example, beyond the configuration of a network operator, a service robot related service may be provided more dynamically based on a dynamic request from an AF of a 3rd party business partner.

Advantageous effects which can be obtained through specific embodiments of the present disclosure are not limited to the advantageous effects listed above. For example, there may be a variety of technical effects that a person having ordinary skill in the related art can understand and/or derive from the present disclosure. Accordingly, the specific effects of the present disclosure are not limited to those explicitly described herein, but may include various effects that may be understood or derived from the technical features of the present disclosure.

For reference, operations of terminals (e.g., UE) described in the present disclosure may be implemented by the devices of FIGS. 1 to 3 described above. For example, the terminal may be the first device 100 or second device 200 of FIG. 2. For example, operations of the terminal described in the present disclosure may be processed by one or more processors 102 or 202. Operations of the terminal described in the present disclosure may be stored in one or more memories 104 or 204 in the form of instructions/programs (e.g., instruction, executable code) executable by one or more processors 102 or 202. One or more processors 102 or 202 may control one or more memories 104 or 204 and one or more transceivers 105 or 206, and execute instructions/programs stored in one or more memories 104 or 204 to perform operations of the terminal (e.g., UE) described in the present disclosure.

Additionally, instructions for performing operations of the terminal described in the present disclosure may be stored in a non-volatile computer-readable storage medium that records them. The storage medium may be included in one or more memories 104 or 204. Instructions recorded in the storage medium may be executed by one or more processors 102 or 202 to perform operations of the terminal described in the present disclosure.

For reference, operations of network nodes (e.g., AMF, SMF, UPF, UDM, UDM/UDR, OAM AF, UPF, NEF, PCF, NWDAF, etc.) or base stations (e.g., NG-RAN, base station, gNB, etc.) described in the present disclosure may be implemented by devices of FIGS. 1 to 3 to be described below. For example, the network node or base station may be the first device 100 or second device 200 of FIG. 2. For example, operations of the network node or base station described in the present disclosure may be processed by one or more processors 102 or 202. Operations of the terminal described in the present disclosure may be stored in one or more memories 104 or 204 in the form of instructions/programs (e.g., instruction, executable code) executable by one or more processors 102 or 202. One or more processors 102 or 202 may control one or more memories 104 or 204 and one or more transceivers 106 or 206, and execute instructions/programs stored in one or more memories 104 or 204 to perform operations of the network node or base station described in the present disclosure.

Additionally, instructions for performing operations of the network node or base station described in the present disclosure may be stored in a non-volatile (or non-transitory) computer-readable storage medium that records them. The storage medium may be included in one or more memories 104 or 204. Instructions recorded in the storage medium may be executed by one or more processors 102 or 202 to perform operations of the network node or base station described in the present disclosure.

While preferred embodiments have been described exemplarily above, the present disclosure is not limited to such specific embodiments, and may be modified, changed, or improved in various forms within the scope described in the spirit and claims of the present disclosure.

In the exemplary systems described above, methods are described based on flowcharts as a series of steps or blocks, but are not limited to the order of the described steps, and some steps may occur in different orders or simultaneously with other steps than described above. Additionally, those skilled in the art will understand that the steps shown in the flowcharts are not exclusive, and other steps may be included or one or more steps of the flowcharts may be deleted without affecting the scope of rights.

Claims in the present disclosure can be combined in a various way. For instance, technical features in method claims of the present disclosure can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method. Other implementations are within the scope of the following claims.

## Claims

1. A method for performing communication related to an accuracy level, the method performed by an Application Function (AF) and comprising:
transmitting, to a Network Exposure Function (NEF), an AF request message,
wherein the AF request message includes one or more parameters related to an accuracy level of a service for a User Equipment (UE),
wherein the one or more parameters include the accuracy level and information related an area of interest related to the accuracy level, and
wherein the one or more parameters are transmitted to a Policy Control Function (PCF) in order for one or more entities included in a 5G Core Network (5GC) to generate a policy used for adjusting the accuracy level and/or performing monitoring related to the accuracy level; and
receiving, from the 5GC, a report message related to the accuracy level.

2. The method of claim 1,
wherein the accuracy level is an accuracy level related to clock synchronization accuracy.

3. The method of claim 1 or 2,
wherein the one or more entities include one or more of a UE, a base station, an OAM, an AMF, an SMF, a UPF, and/or the PCF.

4. The method of any one of claims 1 to 3,
wherein a policy authorization update message including the one or more parameters is transmitted to the PCF by the NEF.

5. The method of any one of claims 1 to 4,
wherein the report message includes information related to the monitoring of the accuracy level of the service and/or information related to adjustment of the accuracy level.

6. The method of any one of claims 1 to 4,
wherein the report message includes first prediction information related to the monitoring of the accuracy level of the service and/or second prediction information related to adjustment of the accuracy level,
wherein the first prediction information and/or the second prediction information is generated by a Network Data Analytics Function (NWDAF).

7. An Application Function (AF) for performing communication related to an accuracy level and the AF comprising:
at least one transceiver;
at least one processor; and
at least one computer memory operably connectable to the at least one processor and storing instructions that, based on being executed by the at least one processor, perform operations comprising: the method of any one of claims 1 to 6.

8. A method for performing communication related to an accuracy level, the method performed by a User Equipment (UE) and comprising:
receiving, from a network entity, a configuration related to an accuracy level of a service for the UE,
wherein the network entity is an Access and Mobility Management Function (AMF) or a Session Management Function (SMF), and
wherein the configuration includes information related to an area of interest and information related to an accuracy level related to the area of interest; and
performing monitoring related to a required accuracy level at a location of the UE based on the configuration.

9. The method of claim 8,
wherein the accuracy level is an accuracy level related to clock synchronization accuracy.

10. The method of claim 8 or 9, further comprising:
determining a required accuracy level at the location of the UE, based on the configuration.

11. The method of claim 10, further comprising:
adjusting the accuracy level based on the determined accuracy level.

12. The method of any one of claims 8 to 11, further comprising:
transmitting a report message related to the accuracy level to an AF via a network or a user plane path,
wherein the report message includes information related to monitoring of the accuracy level of the service and/or information related to adjustment of the accuracy level.

13. A User Equipment (UE) for performing communication related to an accuracy level and the AF comprising:
at least one transceiver;
at least one processor; and
at least one computer memory operably connectable to the at least one processor and storing instructions that, based on being executed by the at least one processor, perform operations comprising: the method of any one of claims 8 to 12.

14. A method for performing communication related to an accuracy level, the method performed by a Policy Control Function (PCF) included in a 5G Core Network (5GC), the method comprising:
receiving, from a Network Exposure Function (NEF), one or more parameters related to the accuracy level,
wherein the one or more parameters include the accuracy level and information related to an area of interest related to the accuracy level, and
wherein the one or more parameters were transmitted to the NEF by an Application Function (AF);
generating a policy used by one or more entities included in the 5GC for adjusting the accuracy level and/or performing monitoring related to the accuracy level; and
transmitting the policy to the 5GC.

15. The method of claim 14,
wherein a policy authorization update message including the one or more parameters is transmitted to the PCF by the NEF.

16. The method of claim 15 or 16,
wherein the policy includes one or more information among information related to clock synchronization accuracy level adjustment, information related to the area of interest, information related to a target accuracy level, information related to a threshold of the accuracy level, and/or information related to an adjustment action.

17. A Policy Control Function (PCF) configured to operate in a wireless communication system, the PCF comprising:
at least one transceiver;
at least one processor; and
at least one computer memory operably connectable to the at least one processor and storing instructions that, based on being executed by the at least one processor, perform operations comprising: the method of any one of claims 14 to 16.
